(19) Europäisches Patentamt

European Patent Office

Office européen des brevets

(11) **EP 1 176 738 A2**

(12) **EUROPEAN PATENT APPLICATION**

(43) Date of publication:
**30.01.2002 Bulletin 2002/05**

(51) Int Cl.⁷: **H04B 7/26**

(21) Application number: **01117969.4**

(22) Date of filing: **24.07.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.07.2000 JP 2000223957**

(71) Applicant: **MITSUBISHI DENKI KABUSHIKI KAISHA**
**Tokyo 100-8310 (JP)**

(72) Inventor: **Takano, Michiaki**
**Chiyoda-Ku, Tokyo 100-8310 (JP)**

(74) Representative: **Sajda, Wolf E., Dipl.-Phys. et al**
**MEISSNER, BOLTE & PARTNER Postfach 86 06 24**
**81633 München (DE)**

(54) **CDMA cellular communication system, CDMA base station apparatus and overreach detecting method**

(57) In a CDMA cellular communication system, there arises a problem of an overreach state in which a mobile station receives radio waves from a remote base station. In order to resolve such a problem, according to the invention, in a CDMA cellular communication system allocating the same code to a first base station (BS1), a second base station (BS2) and a third base station (BS3) installed at predetermined intervals, the first base station (BS1) is provided with a transmission interrupting unit (4) for interrupting signal transmission from its own station and a signal detecting unit (3) for carrying out signal detection by despreading a reception signal by the code allocated to its own station, and detects overreach from the second base station (BS2) during a time period of interrupting transmission from its own station.

*FIG. 2*

EP 1 176 738 A2

## Description

BACKGROUND OF THE INVENTION

Field of the Invention

The present invention relates to a CDMA cellular communication system, a CDMA base station apparatus and an overreach detecting method, further particularly to detection of inter base station overreach which occurs by reutilizing codes in a cellular communication system adopting a CDMA (Code Division Multiple Access) system.

Description of the Background Art

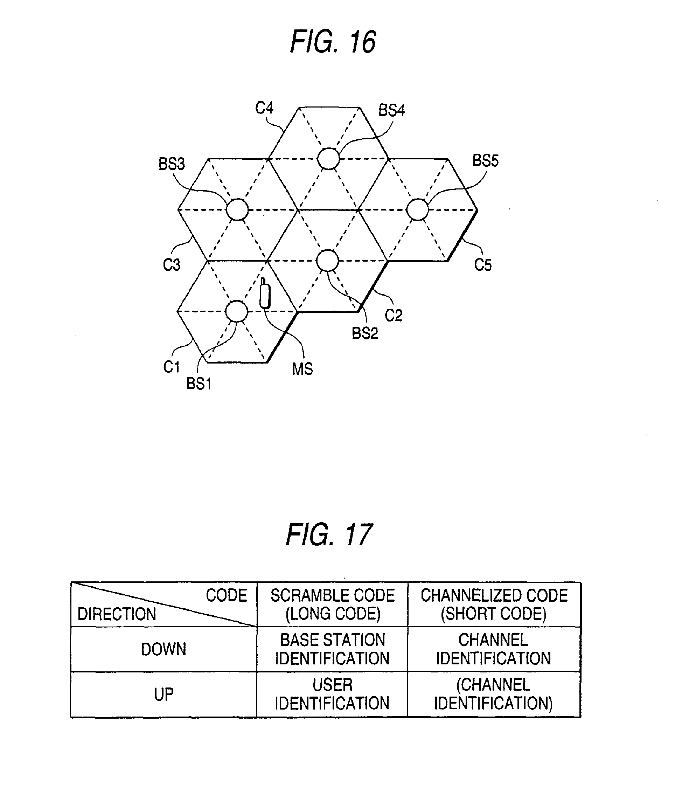

Fig. 16 is a view showing an arrangement example of base stations, cells and sectors in a general CDMA cellular system. Base stations BS1 through BS5 are wireless stations for carrying out wireless communication with a mobile station and are fixed normally. The respective base stations output signals by predetermined transmission power and constitute cover areas C1 through C5 each having a size in accordance with the transmission power. The cover area is referred to as cell and a system constituting a service area by a number of cells is referred to as a cellular system. In Fig. 16, at the respective base stations BS1 through BS5, there are shown, by bold lines, hexagonal cells C1 through C5 constituted centering on the base stations.

Further, when the respective base station is constituted by providing a plurality of directional antennas, each of the cells C1 through C5 is divided into sectors S which are cover areas for the respective directional antennas. In Fig. 16, the sectors S in a triangular shape are shown by broken lines and each of the cells C1 through C5 respectively comprises six of the sectors S.

In CDMA system, on a transmission side, there is carried out spread spectrum modulation by using codes which differ by respective channels, on a reception side, there is carried out despreading by any of the codes to thereby enable to output information of a desired channel. In a general system, respective channels utilized by one base station are allocated with codes (channelized codes) which differ from each other and the base stations are allocated with codes (scramble codes) which differ by respective base stations. Further, there is generally used PN sequence (Pseudo Noise sequence) in these codes.

Fig. 17 is a diagram showing an example of codes used in a mobile communication system of CDMA system. The codes comprise scramble codes Cs and channelized codes Cc. Further, "down" in the drawing signifies a communication direction from a base station BS to a mobile station MS and "up" signifies a communication direction from the mobile station MS to the base station BS. In a general CDMA cellular system, there is adopted CDMA-FDD (Frequency Division Duplex) in which respective base station uses the same frequency and frequencies which differ by an up channel and a down channel.

First, an explanation will be given of the case of the down channel. As down channels, there are "perch channel" for a mobile station to catch a base station, "control channel" for outputting control information to a mobile station and "traffic channel" allocated to respective mobile station. The respective down channels are allocated with different channelized codes Cc, the allocation stays the same even when a base station differs and accordingly, the respective down channels are allocated with scramble codes Cs which differ by respective base stations. That is, a desired channel can be specified by a scramble code Cs for identifying a base station and a channelized code Cc for identifying a channel.

Meanwhile, in up channel, it is general that the scramble code Cs is used as a code for identifying a user (mobile station) and the channelized code Cc is not used. However, it is also possible to allocate the channelized code Cc and specify a channel by the scramble code Cs and the channelized code Cc.

A number of spread codes which can be used in the same system is not infinite. Therefore, in the CDMA cellular system, the code is reutilized at a predetermined interval (reutilization interval). That is, a different spread code is allocated to a base station arranged at a short distance and the same spread code is allocated again to a base station arranged at a predetermined distance or more.

For example, as shown by Fig. 16, base stations BS2 and BS3 installed contiguous to the base station BS1 are allocated with codes different from that of the base station BS1. Meanwhile, the base station BS5 is allocated with a code the same as that of the base station BS1 to thereby reutilize the code. Further, the base station BS4 is allocated with a code different from that of the base station BS1 since the base station BS4 is installed contiguous to the base station BS5. Although in Fig. 16, for convenience of explanation, there is shown an example of a case of reutilizing a code by a cell contiguous to a contiguous cell, generally, there is carried out station installation design of reutilizing the code at a further distance.

The station installation design is carried out also in consideration of radio wave propagation characteristic by configuration of surrounding ground or building to thereby prevent a mobile station MS from receiving radio wave from the remote base station BS5. However, there is a case in which a mobile station actually receives radio wave from a remote base station by various factors. Such a state is referred to as overreach. In the overreach state, there is a possibility that the mobile station MS present in the cell C1 does not catch the base station BS1 but erroneously catches the remote base station BS5 using a spread code the same as that of the base station BS1.

In CDMA system, when signals having remarkably different power levels are multiplexed, there poses a near-far problem that a signal having large power significantly interferes with a signal having small power and a number of channels accomodatable simultaneously (system capacity) is deteriorated. As a countermeasure thereagainst, in normal CDMA system, when there are present a plurality of mobile stations MS in the same cell, transmission powers of the respective mobile stations MS are controlled and reception levels at the base station MS are averaged.

However, when overreach is caused in CDMA system controlling power of the mobile station MS, the mobile station MS transmits a signal to the remote base station BS5 and therefore, a signal having large power is transmitted. Accordingly, there poses a problem that other cell or sector is significantly interfered thereby and the system capacity is significantly deteriorated. That is, the mobile station MS extremely increases transmission power to provide a sufficient reception level at the base station BS5 . As a result, there poses a problem that other cell or sector is considerably interfered thereby and the system capacity is considerably deteriorated.

In order to avoid occurrence of such overreach, it is necessary to firstly detect the overreach state, however, normally, a base station always transmits signals to the perch channel and the control channel and therefore, there is present transmission power of its own station having the same code and the power is sufficiently larger than power of a signal from other station causing overreach and the power of signal from other station cannot be measured.

There is described a system of detecting interference radio wave of a control channel for detecting a signal by synchronizing two or more of base stations and interrupting transmission in Japanese Patent Laid-Open No. 261233/1985. However, the detection system described in Japanese Patent Laid-Open No. 261233/1985, is not related to overreach detection in CDMA system.

SUMMARY OF THE INVENTION

The present invention has been carried out in view of such a situation and it is a first object thereof to detect occurrence of an overreach state. Further, it is a second object thereof to specify other station constituting a source of generating overreach.

According to a first aspect of the invention, there is provided a CDMA cellular communication system which is a CDMA cellular communication system allocating a same code to a first base station, a second base station and a third base station installed at intervals, wherein the first base station comprises a transmission interrupting unit for interrupting signal transmission from the first base station, and a signal detecting unit for carrying out signal detection by despreading a reception signal by a code allocated to the first base station, wherein overreach from the second base station is detected in a time period of interrupting transmission from the first base station. Therefore, overreach can be detected by the CDMA cellular communication system.

Further, according to another aspect of the invention, there is provided a CDMA base station apparatus comprising a transmission unit for generating a transmission signal by spread modulation using a predetermined code, a signal detecting unit for carrying out signal detection by despreading a reception signal by the code, and a transmission interrupting unit for interrupting signal transmission from a station of the CDMA base station apparatus, wherein the signal detecting unit detects a transmission signal from other station allocated with the code during a time period of transmission interruption by the transmission interrupting unit.

Further, according to another aspect of the invention, there is provided a method of detecting overreach which is a method of detecting overreach in a CDMA base station apparatus, the method comprising a transmission step of transmitting a signal generated by spread modulation using a code allocated to a station of the CDMA base station apparatus, a transmission interruption step for interrupting signal transmission from the station, and a signal detection step of carrying out signal detection by despreading a reception signal by using the code during a time period of interrupting transmission of the station.

BRIEF DESCRIPTION OF THE DRAWINGS

Fig. 1 is a view showing an example of an arrangement of base stations and cells in a CDMA cellular system according to the invention;
Fig. 2 is a block diagram showing a constitution example of a base station apparatus constituting a base station BS1 shown in Fig. 1;
Fig. 3 is a block diagram showing a constitution example of a transmission unit 1 shown in Fig. 2;
Fig. 4 is a block diagram showing a constitution example of a signal detecting unit 3 shown in Fig. 2;
Fig. 5 is a diagram showing an example of correlated power in respective timings;
Fig. 6 is a flowchart showing an example of overreach detection operation in the base station apparatus BS1 shown in Fig. 2;
Fig. 7 is a further detained flowchart with respect to step S602 shown in Fig. 6, showing an example of operation of the signal detecting unit 3 shown in Fig. 4;
Fig. 8 is a diagram showing other constitution of the signal detecting unit 3 shown in Fig. 2;
Fig. 9 is a diagram showing an example of correlated power in respective timings in a correlated observation window;

Fig. 10 is a view showing other example of an arrangement of base stations and cells in the CDMA cellular system according to the invention;

Fig. 11 is a view showing other example of an arrangement of base stations and cells in the CDMA cellular system according to the invention;

Fig. 12 is a block diagram showing a constitution example of the base station BS1 shown in Fig. 11;

Fig. 13 is a block diagram showing a constitution example of respective sector unit 7 shown in Fig. 12;

Fig. 14 is an explanatory view for explaining an outline of location service;

Fig. 15 is an explanatory view for explaining a compressed mode;

Fig. 16 is a view showing an example of an arrangement of base stations, cells and sectors in a general CDMA cellular system; and

Fig. 17 is a diagram showing an example of codes used in a mobile communication system of a CDMA system.

## DESCRIPTION OF THE PREFERRED EMBODIMENT

### First Embodiment

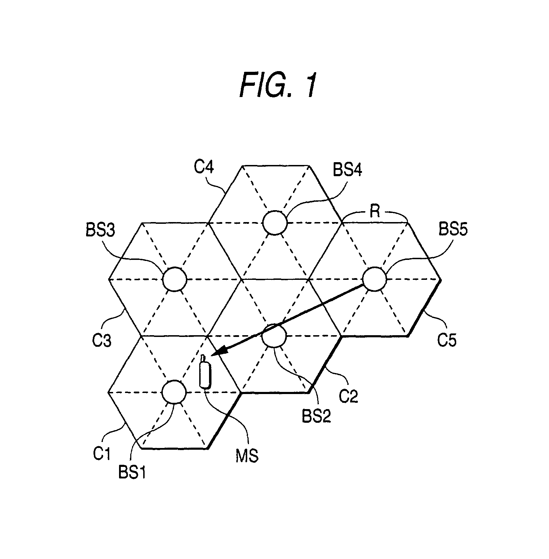

Fig. 1 is a view showing an example of an arrangement of base stations and cells in a CDMA cellular communication system according to the invention. Although in the drawing, there are shown cells C1 through C5 by paying attention to base stations BS1 through BS5, actually, a cellular system is constituted by a number of base stations, cells are spread also at peripheries of the cells C1 through C5 illustrated and a service area is constituted by a number of cells.

According to the cellular system, there is adopted CDMA-FDD (Frequency Division Duplex) in which a down frequency from a base station to a mobile station and an up frequency from a mobile station to a base station, differ from each other. A common transmission frequency used by the respective base stations BS1 through BS5, is designated by notation Fd and a reception frequency is designated by notation Fu.

Further, the respective base station is previously allocated with a base station identification code (down scramble code) which is a code for a mobile station to identify a base station. The base stations BS1 and BS5 are allocated with the same base station identification code $C_{BS}$ and the base stations BS2 through BS4 are allocated with base station identification codes different therefrom. Channelized codes are common to the respective base stations and are designated by notations $C_{C1}$ through $C_{CN}$. Meanwhile, a mobile station in the service area is allocated with $C_{MS}$ as a mobile station identification code (up scramble code) for a base station to identify the mobile station.

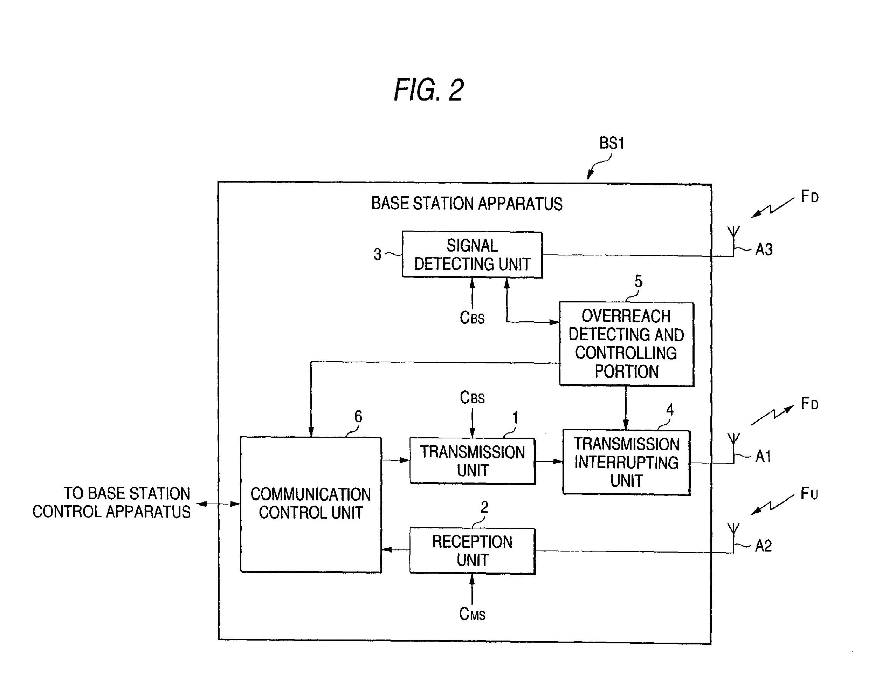

Fig. 2 is a view showing a constitution example of a base station apparatus constituting the base station BS1 of Fig. 1 and the base station BS5 is constructed by the same constitution. Numeral 1 in the drawing designates a transmission unit, numeral 2 designates a reception unit, numeral 3 designates a signal detecting unit, numeral 4 designates a transmission interrupting unit, numeral 5 designates an overreach detecting and controlling portion, numeral 6 designates a communication control unit and notations A1 through A3 designate antennas.

The transmission unit 1 synthesizes a plurality of channels of transmission information and generates a transmission signal by subjecting a synthesized signal thereof to spread modulation using the base station identification code $C_{BS}$. The generated transmission signal is transmitted from the antenna A1 to a mobile station MS as a spectrum spread signal having the frequency Fd. Meanwhile, a spectrum spread signal having the frequency Fu transmitted by the mobile station MS is received by the antenna A2. The reception signal thereof is despread by using the mobile machine identification code $C_{MS}$ at the reception unit 2 and reception information is outputted.

The communication control unit 6 controls a total of the base station apparatus and controls communication with outside. For example, the communication control unit 6 transmits and receives control signals to and from a base station control apparatus (not illustrated), outputs transmission information inputted from the base station control apparatus to the transmission unit 1 and outputs reception information from the reception unit 2 to the base station control apparatus.

The antenna A3 receives a spectrum spread signal having the frequency Fd. A reception signal thereof is despread by using the base station identification code $C_{BS}$ at the signal detecting unit 3 to thereby detect the signal. That is, the signal detecting unit 3 detects the spectrum spread signal having the down frequency generated by the code $C_{BS}$ and detects whether the transmission signal of the base station BS5 allocated with a code the same as that of its own station can be received. The detection result is outputted to the overreach detecting and controlling portion 5.

The overreach detecting and controlling portion 5 controls to detect overreach. Based on a control signal from the overreach detecting and controlling portion 5, the transmission interrupting unit 4 interrupts signal transmission by the base station apparatus BS1 and the signal detecting unit 3 starts detecting signals. Although the transmission interrupting unit 4 shown in Fig. 2 is switching means for selectively outputting the transmission signal from the transmission unit 1 to the antenna A1, the transmission interrupting unit 4 may be constituted by other constitution so far as the other constitution is means capable of interrupting transmission from the antenna A1. For example, there may be constructed a constitution of stopping operation per se of the transmission unit 1 to thereby interrupt transmission.

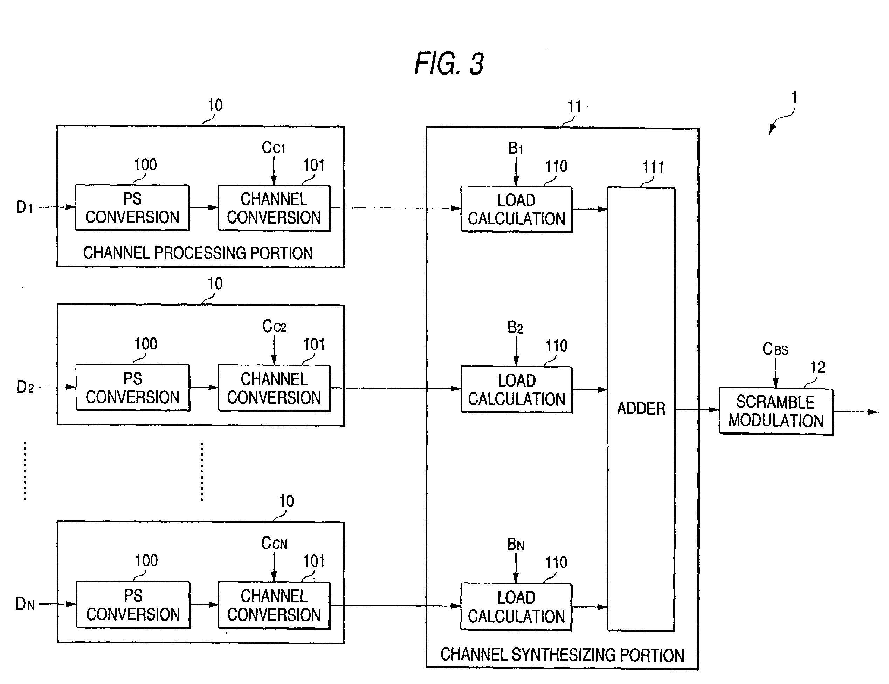

Fig. 3 is a view showing a constitution example of the transmission unit 1 of Fig. 2. Numeral 10 in the drawing designates a channel processing portion for processing respective channel, numeral 11 designates a channel synthesizing portion and numeral 12 designates a scramble modulation portion. Further, notations $D_1$ through $D_N$ designate transmission information for respective channels and in this case, notation $D_1$ designates a perch channel, notation $D_2$ designates a control channel and notations $D_3$ through $D_N$ designate transmission information of traffic channels.

The channel processing portion 10 is constituted by parallel/serial (PS) conversion means 100 and a channel modulation portion 101. The transmission information $D_1$ through $D_N$ is digital data having a predetermined bit width inputted to the PS conversion means 100 and is converted into serial data by the PS conversion means 100. In this case, the digital data is converted into an IQ signal (QPSK signal: Quaternary Phase Shift Keying) comprising an In-phase component I and a quadrature phase component Q.

The channel modulator 101 is previously allocated with channelized codes $C_{C1}$ through $C_{CN}$ having orthogonality for respective channels and multiplies the inputted IQ signal by the allocated channelized codes. That is, at the channel modulator 101, a first time of spread modulation (channel modulation) is carried out to thereby generate a channel modulation signal. Further, with respect to the perch channel, the channel modulation is normally omitted and the channel processing portion 10 of the perch channel can omit the channel modulator 101.

The channel synthesizing portion 11 is constituted by load calculators 110 and an adder 111 and synthesizes respective channel modulation signals by weighted addition. The load calculators 110 are calculating means for multiplying the channel modulation signals by weight coefficients $\beta_1$ through $\beta_N$ and adjust power levels of the channel modulation signals among the channels. The adder 111 is calculating means for calculating a sum of the weighted channel modulation signals.

The scramble modulator 12 is inputted with the code $C_{BS}$ allocated to the base station and multiplies the IQ signal synthesized by the channel synthesizing portion 11 by the code $C_{BS}$ to thereby generate the transmission signal.

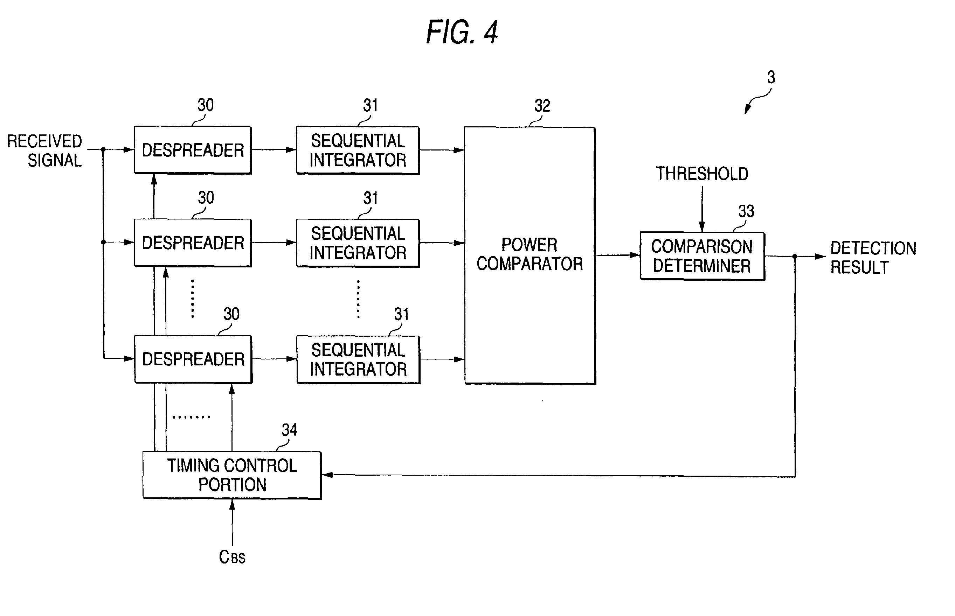

Fig. 4 is a view showing a constitution example of the signal detecting unit 3 of Fig. 2. Numeral 30 in the drawing designates a despreader, numeral 31 designates a sequential integrator, numeral 32 designates a power comparator, numeral 33 designates a comparison determiner and numeral 34 designates a timing control portion. The signal detecting unit 3 is constructed by a constitution similar to means for catching initial synchronization at the mobile station, that is, a so-to-speak searcher for synchronizing the reception signal with a code series when the mobile station is initially connected to the base station.

The signal detecting unit is provided with two or more of the despreaders 30. Although the respective despreaders 30 multiply the reception signal by the code $C_{BS}$ the same as that of the reception signal to thereby calculate correlation, however, relative timings of code series with regard to the reception signal (that is, phases of codes) differ by the respective spreaders 30. The code timings are controlled by the timing control portion 34. In this case, the code timings used by the respective despreaders 30 are controlled to successively retard (or advance) by a single chip period (period of a rectangular wave constituting the code series $C_{BS}$).

The sequential integrator 31 is provided in correspondence with the despreader 30. The respective sequential integrator 31 calculates correlated power by integrating a correlated value calculated by the corresponding despreader 30 over a predetermined period (for example, 1 through 4 frame period). In this case, there is integrated a correlated value calculated by using the base station identification code $C_{BS}$ and correlated power is calculated with respect to a signal which is not subjected to channel modulation, that is, the perch channel.

The power comparator 32 calculates a maximum value of the correlated power by comparing the correlated power calculated by the respective sequential integrators 31. The comparison determiner 33 compares the maximum value with predetermined threshold, determines whether the spread signal by the code $C_{BS}$ is detected and outputs a result of the determination as a detection signal.

When correlated power exceeding the threshold is not provided, the respective despreader 30 further carries out despreading using the code $C_{BS}$ at a different timing and repeats the similar processing. At this occasion, the timing control portion 34 instructs a timing shifted from a previously instructed timing by N chips period to the respective despreader 30 based on the detection signal. When the operation is repeated and the shift of the timing reaches a predetermined time period, a finish signal is outputted.

That is, the signal detecting unit 3 carries out signal detection based on correlated power at respective timing while scanning the code timing and carries out signal detection within a predetermined correlation observation window (range of scanning code timing). The correlation observation window may be provided with a width sufficient for catching synchronization and, for example, the width can be set to a code length or a frame length of the reception signal (preferably, shorter one of these).

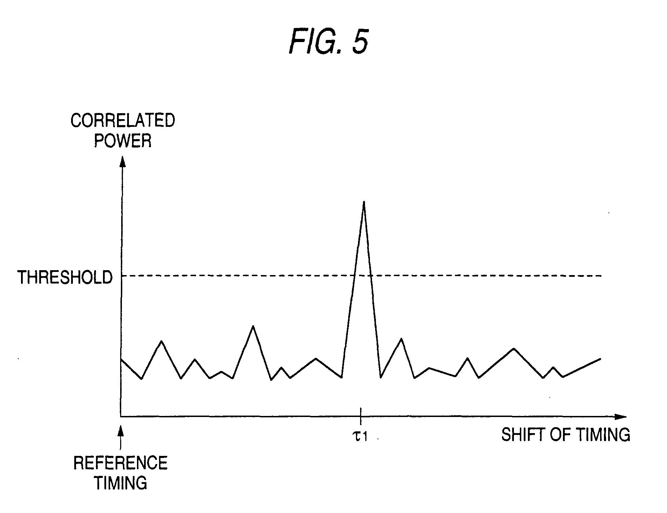

Fig. 5 is a diagram showing an example of correlated power at respective timing. The abscissa shows a shift from a reference timing and the ordinate shows correlated power calculated by the sequential integrator 31. In this case, there is detected a peak exceeding the threshold at timing $\tau_1$ (delay of chip number $\tau_1$). That is, the spread signal by the code $C_{BS}$ is detected.

When the detection signal is not generated by the transmission signal of its own station BS1, the detection signal is generated by the transmission signal of the other station BS5 and there is detected overreach constituting a source of generation by the other station BS5. In this way, when the correlation power peak can be detected in interrupting transmission of its own station, occurrence of overreach can be detected.

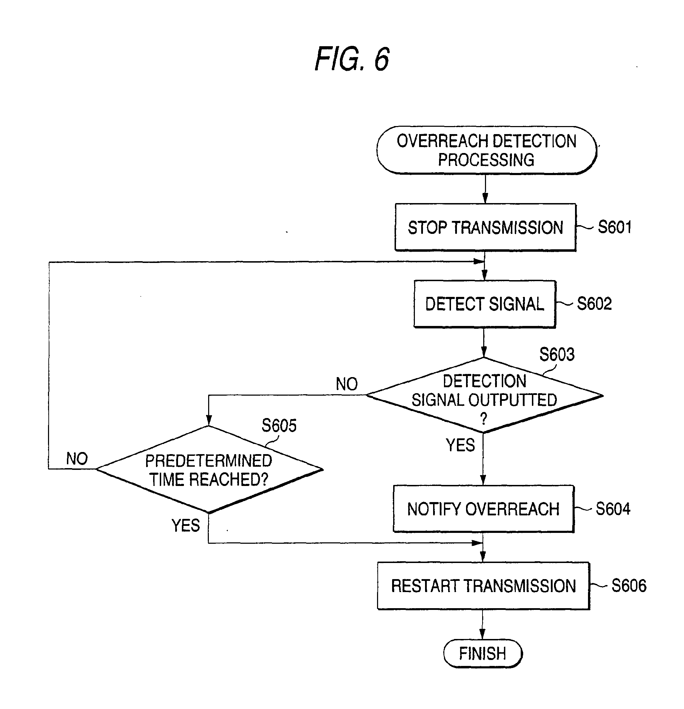

Fig. 6 is a flowchart having steps S601 through S606 showing an example of operation of overreach detection in the base station apparatus BS1 shown in Fig. 2. In overreach detection, firstly, the overreach detecting and controlling portion 5 outputs a control signal for stopping transmission and based on the control signal, the transmission interrupting unit 4 stops supplying transmission power to the antenna A1 (S601).

Further, the overreach detecting and controlling portion 5 outputs a control signal for starting detection, based on the control signal, the signal detecting unit 3 starts detecting signals after stopping transmission by the transmission interrupting unit 4. That is, it is detected whether a signal having a frequency and a code the same as those of the transmission signal of its own station is included in a reception signal of the antenna A3 (S602). When the signal is detected, a detection signal is outputted from the signal detecting unit 3 to the overreach detecting and controlling portion 5 (S603).

The overreach detecting and controlling portion 5 notifies a detection result thereof to the base station control apparatus via the communication control unit 6 (S604) and thereafter, outputs a control signal for starting transmission to the transmission interrupting unit 4, thereby, signal transmission is restarted (S606). Meanwhile, in the case in which the detection signal is not outputted from the signal detecting unit 3, when a finish signal is outputted, transmission is restarted and in the case in which the finish signal is not outputted, signal detection is continued (S605, S606).

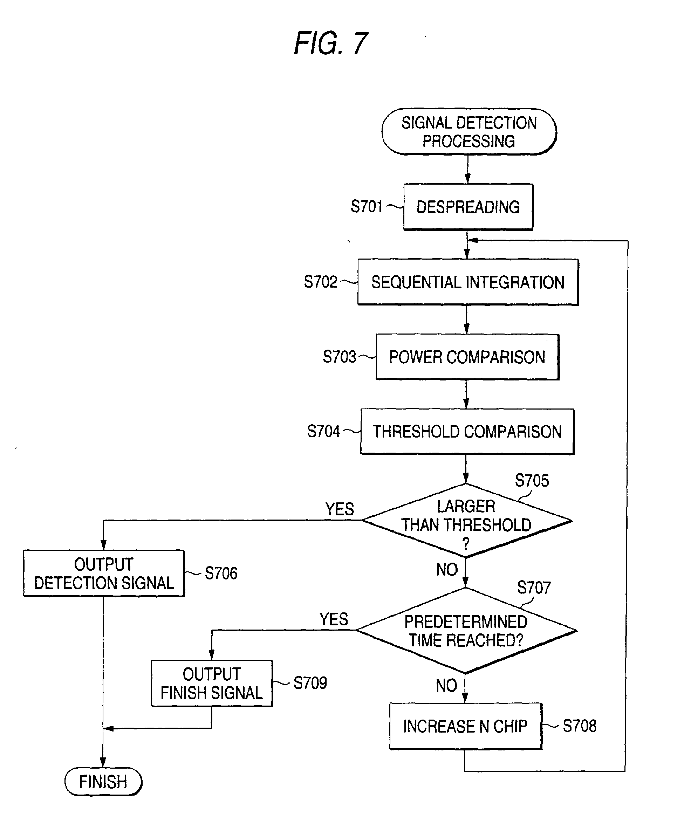

Fig. 7 is a further detailed flowchart with respect to step S602 of Fig. 6 having steps S701 through S709, showing an example of operation of the signal detecting unit 3 shown in Fig. 4. First, at a timing designated by the timing control portion 34, the despreader 30 calculates a correlated value by carrying out despreading (S701) and the sequential integrator 31 integrates the correlated value (S702) to thereby calculate correlated power at respective designated code timing. The correlated power is compared by the power comparator 32 to thereby calculate a maximum value (S703) and the maximum value and predetermined threshold value are compared by the comparison determiner 33 (S704).

As a result, when the maximum correlated power exceeds the threshold value, the detection signal is outputted and the signal detection process is finished (S705, S706). Meanwhile, in the case in which the maximum correlated power does not exceed the threshold value, when a shift of timing used in the despreading does not reach a code length or a frame length, the timing control portion 34 designates a timing a shift from a reference timing of which is larger to the despreader 30 (S707, S708) and operation of S701 through S705 is repeated. Further, in the case in which the maximum correlated power does not exceed the threshold, when the shift of timing reaches the code length or the frame length, the timing control portion 34 outputs the finish signal to thereby finish the signal detection process (S709).

According to the embodiment, the base station apparatus of the CDMA cellular communication system interrupts signal transmission of its own station by the transmission interrupting unit and during the interrupted time period, there is detected the signal having the code the same as that of the transmission signal of its own station. That is, by temporarily interrupting transmission of its own station and excluding influence thereof, the transmission signal of other station allocated with the same code can be detected and there can be detected occurrence of overreach which has been impossible in the conventional CDMA system. Further, overreach can be detected at the base station apparatus and accordingly, it is not necessary to newly install an exclusive apparatus therefor and overreach detection can be realized at a low cost.

When overreach is detected, by reducing transmission power of a source of generating overreach (other station), the overreach can be resolved. Further, it is also possible in detecting overreach that either one of base stations of its own station and other station stops service, or allocation of the code or the frequency to its own station or a corresponding other station is changed to thereby avoid occurrence of overreach thereafter. Further, in the case in which overreach can be detected at the base station, when station installation design is carried out centering on the base station, the station installation design can be redesigned efficiently.

Further, although according to the embodiment, an explanation has been given of an example of the case of carrying out signal detection of the perch channel, the base station apparatus according to the invention is not limited to such a constitution. For example, the overreach state can also be detected by carrying out despreading by the base station identification code $C_{BS}$ and the predetermined channelized codes $C_{C2}$ through $C_{CN}$ at the despreader 30 to thereby detect a signal subjected to channel modulation, for example, a signal of the control channel.

Further, although according to the embodiment, an explanation has been given of the case of the signal detecting unit 3 having two sets or more of the despreaders 30 and a set of the sequential integrators 31, the invention is not limited to such a constitution. That is, the signal detecting unit 3 can be constituted also by one set of the despreader 30 and the sequential integrator 31 and can also be constituted by using other well-known correlation technology, for example, a matched filter.

Further, although according to the embodiment, an explanation has been given of the case of the communication system adopting CDMA-FDD, the invention is not limited to the case of CDMA-FDD. For example, in the case of the communication system adopting CDMA-TDD (Time Division Duplex) for dividing time slots by "up" and "down", the base station apparatus BS1 may detect a signal having a time slot and a code the same as those of the transmission signal of its own station. In this case, when overreach is detected, by changing a transmission timing of either one of base stations, occurrence of overreach can also be avoided.

Second Embodiment

Although according to First Embodiment, an explanation has been given of an example of a case in which the width of the correlation observation window is the code length or the frame length, according to the embodiment, an explanation will be given of an example in which when the reference timings of the base stations allocated with the same code are synchronized, the signal detecting unit 3 uses a correlation observation window having a narrower width.

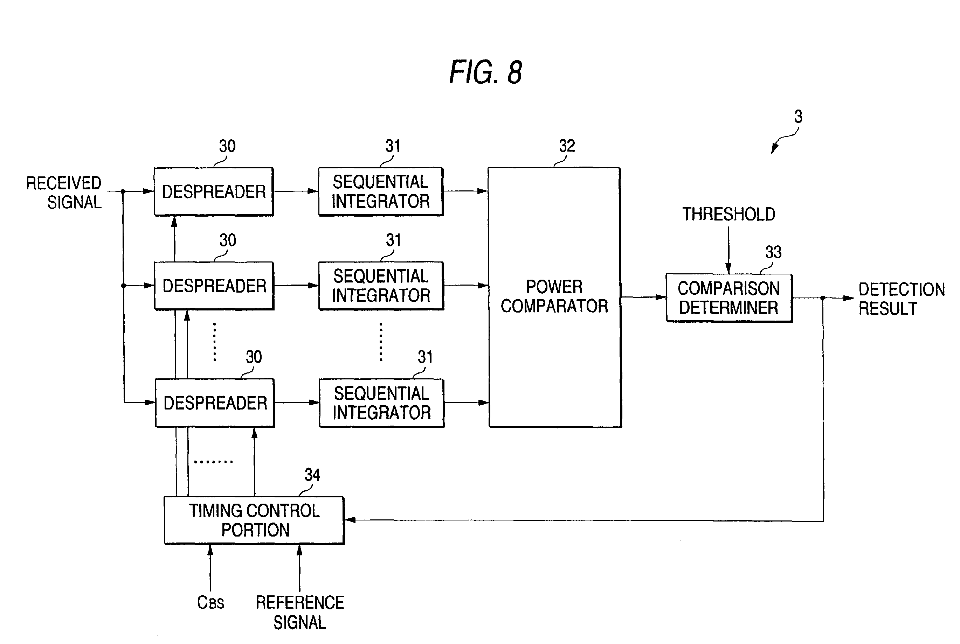

Fig. 8 is a view showing other constitution example of the signal detecting unit 3 of Fig. 2. Fig. 8 differs from Fig. 4 in that the reference signal is inputted to the timing control portion 34. The reference signal is a signal providing reference timings of spreading and despreading and reference timings of the base stations BS1 and BS5 allocated with the same notation in Fig. 1 are synchronized.

Although with respect to the transmission signal from the other station BS5, reception time at its own station BS1 is delayed from transmission time at the other station BS5 and a delay time period thereof is a time period in accordance with a distance between the two base stations (propagation time period). Therefore, when the reference signal of the signal detecting unit 3 of its own station BS1 is synchronized with the reference signal of the transmission unit 1 of the other station BS5, at its own station BS1, a code timing (prediction timing) for detecting the transmission signal of the other station BS5 is already known.

That is, when the transmission unit 1 of the other station BS5 carries out spread modulation by using the code $C_{BS}$ synchronized with the reference timing and the delay time period is previously given to the timing control portion 34 of its own station BS1, the timing control portion 34 can detect the transmission signal from the other station BS5 by generating a code series at the prediction timing delayed from the reference timing by a predetermined time period.

By constituting the correlation observation window of the signal detection unit 3 by an observation window having a predetermined width including the prediction timing, in the case of overreach state, the transmission signal from the other station BS5 can firmly be received even by the observation window having a comparatively narrow width. The width of such an observation window is constituted by a width capable of detecting signals even when the delay time period is more or less varied by various factors, for example, there is preferably used a window having a width of 10 chips before and after the prediction timing as center, more preferably, several chips therebefore and thereafter.

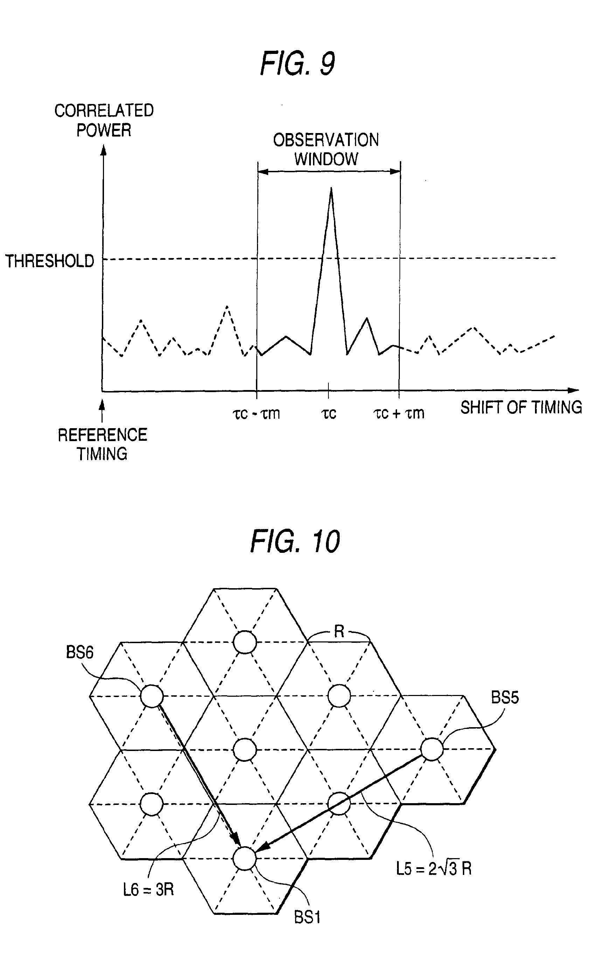

Fig. 9 is a diagram showing an example of correlated power in respective timings in the correlation observation window. The abscissa shows a shift from the reference timing and the ordinate shows correlated power calculated by the sequential integrator. In this case, a correlated value is monitored by an observation window having a width 2 $\tau_m$ centering on timing $\tau_c$.

When the respective cell of Fig. 1 is constituted by a regular hexagonal shape having a side R of 10 km, the distance between its own station BS1 and the other station BS5 becomes 2 $\sqrt{3 \times R}$=34.6 km. Assuming free space propagation, a propagation time period of 300 m is 1 μs and therefore, the delay time period until the transmission signal from the other station BS5 is received by its own station BS1 becomes 34.6km/300m×1μs=115.3μs. When the delay time period is converted into a number of chips, in the case of a spread chip of 3.84 Mcps, $\tau_c$=115.3μs×3.84Mcps=442.8 chips. Therefore, by setting $\tau_c$=443 and $\tau_m$=10 chips, when the correlated value is calculated with respect to 21 of timings delayed from the reference timing by 433 through 453 chip periods, the signal from the other station BS5 can be detected.

According to the embodiment, overreach can be detected firmly even by using the correlation observation window having a width sufficiently narrower than the code length and the frame length. Therefore, overreach can be detected by a simple constitution or in a short period of calculation.

Further, in a synchronized type CDMA cellular communication system in which the reference timings of the base stations are synchronized as in the embodiment, when overreach is detected, by shifting a code timing of its own station or corresponding other station, occurrence of overreach thereafter can also be avoided.

Third Embodiment

According to the embodiment, an explanation will be given of a case in which when there are two or more of other stations capable of constituting sources of generating overreach, the other stations constituting the sources of generating overreach are specified by calculating distances to the sources of generating overreach. Fig. 10 is a view showing other embodiment of an arrangement of base stations and cells in a CDMA cellular system according to the invention. The same code is allocated to base stations BS1, BS5 and BS6 in the drawing and codes different therefrom are allocated to other base stations. Further, reference timings of the base stations BS1, BS5 and BS6 are synchronized.

In this case, when the correlated power shown in Fig. 5 is provided, the timing $\tau_1$ when the peak exceeding the threshold is detected, corresponds to a distance between the base stations. That is, a distance to a source of transmitting a signal causing overreach can be calculated by a delay time period from the reference timing to peak detection. Therefore, when distances to the base stations BS5 and BS6 are already known, based on calculated distances, it can be determined which of the base stations BS5 and BS6 constitutes the source of generating overreach.

Assuming that the respective cell is constituted by a regular hexagonal shape having a side R of 10 km, a distance L5 to the base station BS5 is $2\sqrt{3 \times R}$ =34.6 km and a distance L6 to the base station BS6 is 3R=30 km. Assuming free base propagation, there are produced delay of 115.3 μs in the case of the base station BS5 and delay of 100 μs in the case of the base station BS7. Meanwhile, when a spread chip is constituted by 3.84 Mcps, the signal detecting unit can detect a delay time period by resolution of 0.26 μs which is sufficiently smaller than a difference 15.3 μs between delay time periods from the base stations BS5 and BS6.

Therefore, when distances to respective base stations allocated with codes the same as that of its own station and having a possibility of causing overreach, are previously given to the overreach detecting and controlling portion 5 and the signal detecting unit 3 outputs the delay $\tau_1$ of the peak relative to the reference timing along with the detection signal, the base stations causing overreach can be specified by the overreach detecting and controlling portion 5.

According to the embodiment, by calculating a distance between the base stations which are brought into the overreach state from timings of correlated peaks, not only occurrence of overreach can be detected but also the base station causing overreach can be specified.

Further, although according to the embodiment, an explanation has been given of the case of specifying the source of generating overreach at inside of the base station, the source of generating overreach may be specified by the method that the communication control unit 6 in a control apparatus of a network having information of station installation, notifying a result of overreach detection to the base station control apparatus along with information indicating the distance to the source of generating overreach.

Fourth Embodiment

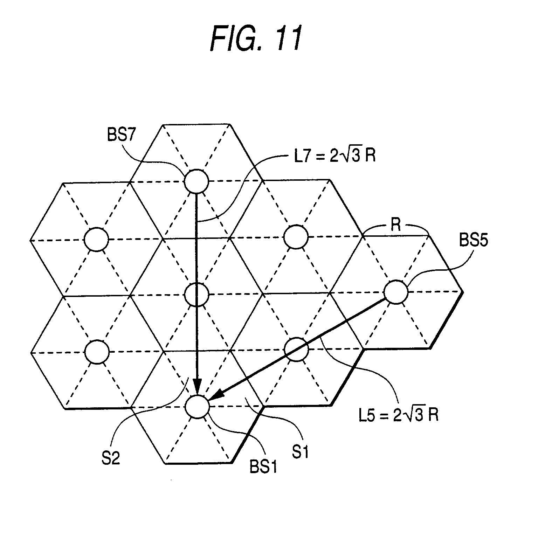

According to the embodiment, an explanation will be given of a case of specifying a base station constituting a source of generating overreach based on a direction of arrival of a reception signal. Fig. 11 is a view showing an example of an arrangement of base stations, cells and sectors in a CDMA cellular communication system according to the invention. Base stations BS1, BS5 and BS7 in the drawing are allocated with the same code and other base stations are allocated with codes different therefrom. Both of the base stations BS5 and BS7 are disposed at a distance of $2\sqrt{3 \times R}$ from the base station BS1 and therefore, a source of generating overreach cannot be specified by the distance as in the case of the third embodiment.

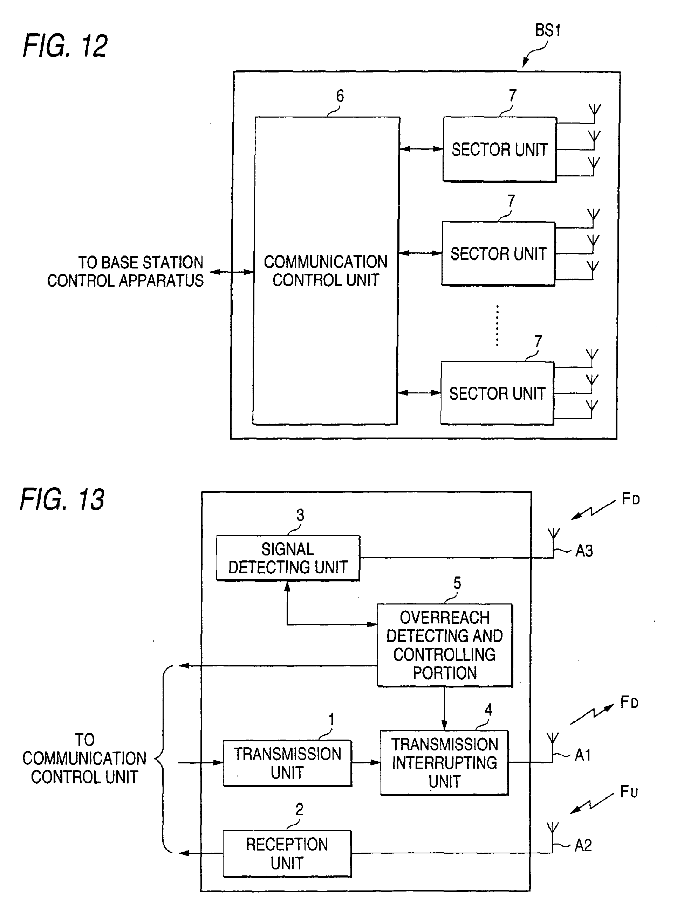

Fig. 12 is a view showing a constitution example of the base station BS1 of Fig. 11 comprising one communication control unit 6 and two or more of sector units 7. A base station apparatus corresponds to a cell and the sector units correspond to sectors. In Fig. 11, one cell is constituted by 6 sectors, the base station apparatus BS1 is provided with 6 of the sector units and the communication control unit 6 controls a total of the base station apparatus and controls communication of 6 of the sector units 7.

Fig. 13 is a view showing a constitution example of the respective sector unit 7 of Fig. 12. There is constructed a constitution similar to that of Fig. 2 except that the communication control unit is not provided, blocks in correspondence with constituent portions of Fig. 2 are attached with the same notations and an explanation thereof will be omitted.

Each of the sector units 7 is constituted to be provided with antennas A1 through A3. The antennas A1 through A3 are directional antennas covering corresponding sectors. When the base station BS1 is constituted to be provided with two or more of directional antennas in correspondence with the sectors, a base station causing overreach can be specified by detecting overreach in a reception signal of any of the directional antennas. That is, it can be determined that when a signal is detected by the antenna A3 in correspondence with the sector S1, overreach is caused by the base station BS5 and when a signal is detected by the antenna A3 in correspondence with the sector S2, overreach is caused by the base station BS7.

When overreach is detected by any of the sector units 7, an overreach detection signal is outputted from the overreach detecting and controlling portion 5 of the corresponding sector unit 7. The communication control unit 6 determines based on the sector unit 7 outputting the corresponding signal, that is, based on a direction of reception of the directional antenna A3.

Therefore, when there is previously provided a direction of the respective base station allocated with a code the same as that of its own station and having a possibility of causing overreach, based on the direction of the antenna by which overreach is detected, the base station causing overreach can be specified.

According to the embodiment, not only generation of overreach can be detected but also in detecting overreach, the base station causing overreach can be detected by the direction of receiving the signal.

Further, although according to the embodiment, an explanation has been given of the case in which the communication control unit 6 at inside of the base station specifies the source of generating overreach, the source of generating overreach may be specified in a control apparatus of a network in which the communication control unit 6 notifies overreach detection to the base station control apparatus along with information of the sector indicating a direction of reception and which is provided with information of station installation. Further, the other station can also be specified based on both of the distance and the direction of reception by calculating the distance to the other station as shown in the third embodiment.

Fifth Embodiment

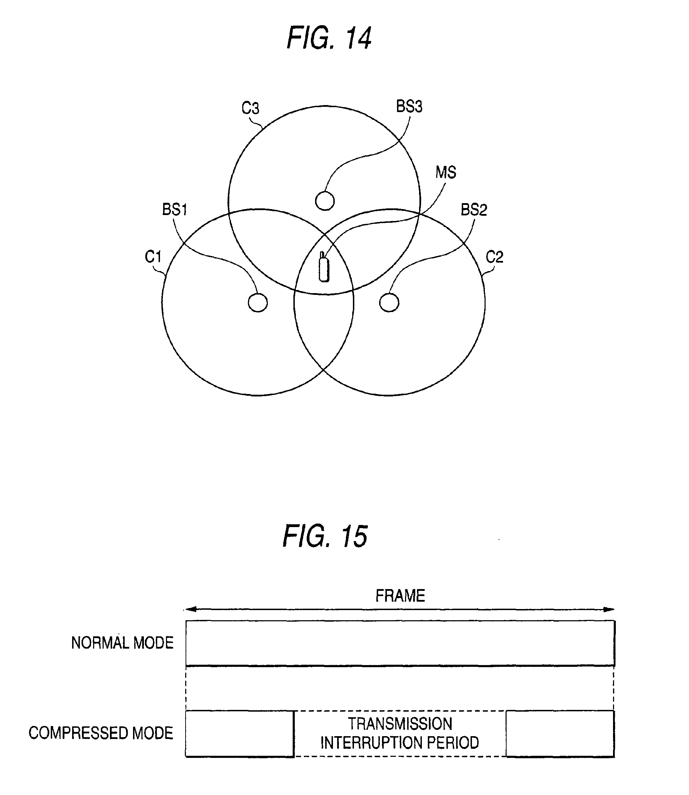

According to the embodiment, an explanation will be given of a case of interrupting transmission of a base station by utilizing a transmission interrupted period in a location service. Fig. 14 is an explanatory view for explaining an outline of the location service, showing a case in which cells C1 through C3 are shown by a circular shape and the mobile station MS is disposed in a region duplicated with the cells C1 through C3.

The location service is a service of specifying a position of a mobile station by measuring a signal intensity between a base station and the mobile station. According to base stations BS1 through BS3 of a system for providing such a service, transmission power is periodically stopped and a distance to the mobile station MS is measured. When distances from three or more of the base stations are known, the position of the mobile station MS can be specified. In this case, positions of the base stations BS1 through BS3 are already known, based on measurement results at the base stations BS1 through BS3, the position of the mobile station MS is calculated and the position information is transmitted to the mobile station MS.

The transmission interruption unit 4 interrupts signal transmission during a transmission stop period such as that in the location service and during the transmission interrupted period, the signal detecting unit 3 detects signals by the same code. Therefore, overreach can be detected without interrupting transmission for detecting overreach.

Sixth Embodiment

According to the embodiment, an explanation will be given of a case of interrupting transmission of a base station by utilizing a transmission interrupted period of a compressed mode. When a mobile station comes outside of a service area and other communication system can be utilized, it is preferable for the mobile station to shift swiftly to roaming service. Therefore, it is preferable that a mobile station present at a cell at an end portion of a service area or a cell contiguous thereto previously receives a signal of the other communication system and there is a case in which there is adopted a compressed mode of temporarily interrupting transmission output at a base station at the end portion of the service area or contiguous thereto.

Fig. 15 is an explanatory view for explaining the compressed mode, showing one frame of a transmission signal from a base station in a normal mode and the compressed mode. The base station in the compressed mode is provided with a transmission interrupted period in the frame by shortening a transmission time period by increasing a spread rate of a transmission signal. In Fig. 15, signal transmission is carried out at a first portion and a final portion of the frame and the transmission interrupted period is provided at a middle of the frame.

When the transmission interruption unit 4 interrupts signal transmission in a time period of stopping transmission of such a compressed mode and the signal detecting unit 3 detect signals by the same code in the transmission interrupted period, overreach can be detected without causing loss by interrupting transmission.

**Claims**

1. The CDMA cellular communication system which is a system of the type allocating the same code to a first base station (BS1), a second base station (BS2) and a third base station (BS3) installed at intervals, wherein the first base station comprises:

   - a transmission interrupting unit (4) for interrupting signal transmission from the first base station (BS1); and
   - a signal detecting unit (3) for carrying out signal detection by despreading a reception signal by a code allocated to the first base station (BS1);

   wherein overreach from the second base station (BS2) is detected (5) in a time period of interrupting transmission from the first base station (BS1).

2. The system according to claim 1,
   wherein the signal detecting unit (3) includes a correlation observation window (32-34) previously determined based on an installation interval between the first and the second base stations (BS1, BS2) and signal detection is carried out within the correlation observation window.

3. The system according to claim 1 and 2,
   wherein the first base station (BS1) includes two or more of directional antennas (A1, A2, A3) in correspondence with sectors and determines a source of generating overreach in either of the second base station (BS2) and the third base station (BS3) based on the sector at which the overreach is detected.

**4.** The system according to any of claims 1 to 3, wherein the first base station (BS1) determines a source of generating the overreach based on a code timing in signal detection.

**5.** A CDMA base station apparatus, comprising:

- a transmission unit (1) for generating a transmission signal by spread modulation using a predetermined code;
- a signal detecting unit (3) for carrying out signal detection by despreading a reception signal by the code; and
- a transmission interrupting unit (4) for interrupting signal transmission from a station of the CDMA base station apparatus;

wherein the signal detecting unit (3) detects a transmission signal from another station allocated with the code during a time period of transmission interruption by the transmission interrupting unit (4).

**6.** The apparatus according to claim 5, wherein the transmission unit (1) uses the code synchronized with the reference timing and the signal detecting unit (3) includes a predetermined correlation observation window (32-34) having a previously provided shift of a timing relative to the reference timing and carries out the signal detection within the correlation observation window.

**7.** The apparatus according to claim 5 or 6, wherein the transmission unit (1) uses the code synchronized with a reference timing and the signal detecting unit (3) calculates a distance to the other station based on the reference timing and a code timing in the signal detection.

**8.** The apparatus according to any of claims 5 to 7, wherein the transmission interrupting unit (4) comprises means for stopping transmission power during a time period of interrupting transmission by a location service.

**9.** The apparatus according to any of claims 5 to 7, wherein the transmission interruption unit (4) comprises means for stopping transmission power during a time period of interrupting transmission by a compressed mode.

**10.** A method of detecting overreach, wherein the method is adapted to detect overreach in a CDMA base station apparatus, the method comprising the following steps:

- a transmission step of transmitting a signal generated by spread modulation using a code allocated to a station of the CDMA base station apparatus;
- a transmission interrupting step (S601) for interrupting signal transmission from the station; and
- a signal detecting step (S602) of carrying out signal detection by despreading a reception signal by using the code during a time period of interrupting transmission of the station.

## FIG. 1

# FIG. 2

BS1

BASE STATION APPARATUS

3 — SIGNAL DETECTING UNIT

$F_D$

A3

5

OVERREACH DETECTING AND CONTROLLING PORTION

$C_{BS}$

$C_{BS}$

6

1

4

COMMUNICATION CONTROL UNIT

TRANSMISSION UNIT

TRANSMISSION INTERRUPTING UNIT

$F_D$

A1

TO BASE STATION CONTROL APPARATUS

2

RECEPTION UNIT

$F_U$

A2

$C_{MS}$

EP 1 176 738 A2

*FIG. 3*

# FIG. 4

RECEIVED SIGNAL → DESPREADER (30) → SEQUENTIAL INTEGRATOR (31) → POWER COMPARATOR (32) → COMPARISON DETERMINER (33) → DETECTION RESULT

THRESHOLD → COMPARISON DETERMINER (33)

TIMING CONTROL PORTION (34)

$C_{BS}$

3

EP 1 176 738 A2

# FIG. 5

CORRELATED
POWER

THRESHOLD

$\tau 1$

SHIFT OF TIMING

REFERENCE
TIMING

## FIG. 6

```
         ┌──────────────────────┐
         │  OVERREACH DETECTION │
         │      PROCESSING      │
         └──────────┬───────────┘
                    ↓
         ┌──────────────────────┐
         │  STOP TRANSMISSION   │── S601
         └──────────┬───────────┘
                    ↓
         ┌──────────────────────┐
         │    DETECT SIGNAL     │── S602
         └──────────┬───────────┘
                    ↓              S603
              ╱──────────────╲
     NO      ╱   DETECTION    ╲
    ←───────╱ SIGNAL OUTPUTTED ╲
           ╲        ?         ╱
            ╲────────────────╱
                   │ YES
                   ↓
         ┌──────────────────────┐
         │   NOTIFY OVERREACH   │── S604
         └──────────┬───────────┘
                    ↓
         ┌──────────────────────┐
         │ RESTART TRANSMISSION │── S606
         └──────────┬───────────┘
                    ↓
               ( FINISH )
```

S605

PREDETERMINED TIME REACHED?

NO

YES

16

## FIG. 7

```
              ┌─────────────────────┐
              │  SIGNAL DETECTION   │
              │     PROCESSING      │
              └─────────────────────┘
                         │
                         ▼
     S701 ──┤      DESPREADING       │
                         │
                         ▼
     S702 ──┤  SEQUENTIAL INTEGRATION │
                         │
                         ▼
     S703 ──┤   POWER COMPARISON     │
                         │
                         ▼
     S704 ──┤  THRESHOLD COMPARISON  │
                         │
                         ▼
                                    S705
              ◇ LARGER THAN THRESHOLD ? ◇
       YES                          NO

  ┌──────────────────┐
  │     OUTPUT        │── S706
  │ DETECTION SIGNAL  │
  └──────────────────┘
                                    S707
              ◇ PREDETERMINED TIME REACHED? ◇
       YES                          NO

  ┌──────────────────┐
  │     OUTPUT        │── S709
  │  FINISH SIGNAL    │
  └──────────────────┘
                      ┌──────────────────┐
                      │  INCREASE N CHIP │── S708
                      └──────────────────┘

        ┌────────┐
        │ FINISH │
        └────────┘
```

## FIG. 8

EP 1 176 738 A2

## FIG. 9

## FIG. 10

## FIG. 11

BS7

L7 = $2\sqrt{3}$ R

R

BS5

L5 = $2\sqrt{3}$ R

S2

BS1

S1

*FIG. 12*

BS1

6

COMMUNICATION
CONTROL UNIT

7

SECTOR UNIT

7

SECTOR UNIT

7

SECTOR UNIT

TO BASE STATION
CONTROL APPARATUS

*FIG. 13*

3

SIGNAL
DETECTING UNIT

5

OVERREACH
DETECTING AND
CONTROLLING
PORTION

$F_D$

A3

1

TRANSMISSION
UNIT

4

TRANSMISSION
INTERRUPTING
UNIT

$F_D$

A1

TO
COMMUNICATION
CONTROL UNIT

2

RECEPTION
UNIT

$F_U$

A2

## FIG. 14

## FIG. 15

## FIG. 16

## FIG. 17

| CODE<br>DIRECTION | SCRAMBLE CODE<br>(LONG CODE) | CHANNELIZED CODE<br>(SHORT CODE) |
|---|---|---|
| DOWN | BASE STATION<br>IDENTIFICATION | CHANNEL<br>IDENTIFICATION |
| UP | USER<br>IDENTIFICATION | (CHANNEL<br>IDENTIFICATION) |